Europäisches Patentamt

European Patent Office

Office européen des brevets

(19)

(11) Veröffentlichungsnummer : **0 138 923**
**B1**

(12) **EUROPÄISCHE PATENTSCHRIFT**

(45) Veröffentlichungstag der Patentschrift :
29.07.87

(21) Anmeldenummer : 84901334.7

(22) Anmeldetag : 28.03.84

(86) Internationale Anmeldenummer :
PCT/DE 84/00075

(87) Internationale Veröffentlichungsnummer :
WO/8403842 (11.10.84 Gazette 84/24)

(51) Int. Cl.⁴ : **B 01 D 46/52**

(54) FILTERPATRONE FÜR FILTERAPPARATE.

(30) Priorität : 31.03.83 DE 3311863

(43) Veröffentlichungstag der Anmeldung :
02.05.85 Patentblatt 85/18

(45) Bekanntmachung des Hinweises auf die Patenterteilung : 29.07.87 Patentblatt 87/31

(84) Benannte Vertragsstaaten :
AT BE CH DE FR GB LI LU NL SE

(56) Entgegenhaltungen :
EP-A- 0 067 115
GB-A- 2 048 110
US-A- 2 720 937

(73) Patentinhaber : TURCK, Ernst
Peter-Parler-Strasse 33
D-8264 Waldkraiburg (DE)

(72) Erfinder : TURCK, Ernst
Peter-Parler-Strasse 33
D-8264 Waldkraiburg (DE)

(74) Vertreter : Wey, Hans-Heinrich, Dipl.-Ing. et al
Patentanwälte Müller-Börner & Wey Widenmayerstrasse 49
D-8000 München 22 (DE)

### Beschreibung

Die Erfindung betrifft eine rückreinigungsfähige Filterpatrone für Filterapparate zum Entfernen von Verunreinigungen auch aus heißen und bzw. oder unter höherem Druck stehenden, strömenden Gasen mit einem zickzackförmig gefalteten, gasdurchströmten Filterstoff, dessen faltungsbedingte Teilflächen zwischen den Faltlinien relativ dicht nebeneinanderliegend angeordnet sind.

Bei den in Betracht kommenden Filterpatronen werden als Filterstoff phenolharzgetränkte Faserstoffe, insbesondere gasdurchlässige Papiere, Faservliese unterschiedlichster Art, welche aus zickzackförmig gefalteten Bändern dieses Materials bestehen, verwendet. Je nach dem verwendeten Filterstoff ist dessen Stabilität begrenzt. Filterstoffe, die aus temperaturempfindlichem Material bestehen, verlieren bei steigender Temperatur an Stabilität, was insbesondere dann unangenehme Folgen zeitigt, wenn unter bestimmten Betriebsbedingungen infolge der nicht mehr vorhandenen Standfestigkeit des Filterstoffs bzw. der Faltung die Teilflächen des Filterstoffs zwischen den einzelnen Faltlinien zur Anlage aneinander kommen und möglicherweise aneinander haftenbleiben. Dadurch wird die gesamte aktive Filterfläche verringert, was zu einer Abnahme der Leistungsfähigkeit des Filters führt.

Die vorerwähnten Mängel treten insbesondere dann ein, wenn im Rahmen einer Rückreinigung des Filterstoffs dieser mit einem Gasstromimpuls in entgegengesetzter Richtung beaufschlagt wird.

Um dem vorerwähnten Nachteil zu begegnen, hat man aus Papier bestehende Filterstoffe mit aus ihrer Ebene heraus geprägten Noppen oder dgl. versehen, die aber auch nur solange eine Wirkung auszuüben vermögen, als sie ihre Form beibehalten. Bei den in Betracht kommenden Filtern hat sich aber gezeigt, daß bei höheren Temperaturen des zu reinigenden Gasstromes der Filterstoff so stark erwärmt wird und erweicht, daß die Noppen ihre ursprüngliche Form verlieren bzw. durch die aneinander anliegenden Teilflächen einer Falte flachgedrückt werden. Aber auch durch das Waschen verschmutzter Filterpatronen bilden sich die Noppen zurück. Hieraus resultiert, daß Papier und dgl. Fasermaterialien als Filterstoff für die in Betracht kommenden Filterpatronen ungeeignet sind. Am vorteilhaftesten sind aus Fasermaterial bestehende Vliese, die aber wiederum den Nachteil haben, nicht ausreichend formstabil zu sein.

Um das Kollabieren der Falten des Filterstoffs von Kassettenfiltern zu verhindern, ist weiterhin vorgeschlagen worden, zwischen diesen Abstandshalter anzuordnen (EP-A-0067115 = (1), US-A-2 720 937 = (2)). Diese Abstandshalter sollen nach einem Vorschlag in (1) keilförmig ausgebildet sein und aus einem weitmaschigen Draht- bzw. Streckmetallgitter oder durchbrochener Folie oder dgl. Material bestehen. Derartige Abstandshalter vermögen zwar das Kollabieren der Falten des Filterstoffs zu verhindern, sie haben jedoch entscheidende Nachteile. Die Abstützung von gefaltetem Filterstoff durch weitmaschig gefaltete Drahtgitter kommt für eng gefaltete Filterpatronen nicht in Frage, da selbst bei einer Drahtstärke z. B. von nur 0,5 mm zu viel Abströmraum zwischen den benachbarten Teilflächen einer Falte verlorengeht und höchst unerwünschte Turbulenzen entstehen. Wird die Drahtstärke noch dünner gehalten, geht die notwendige Stützwirkung verloren. Außerdem läßt sich mit gitterartigen Abstandshaltern die Rückreinigungsluft nicht symmetrisch auf die beiden Teilflächen einer Falte verteilen, so daß die Reinigung der Falten vor allem auch aus dem Innersten heraus unbefriedigend ist. Die Leistungsfähigkeit des bekannten Filters ist daher erheblich herabgesetzt.

Nach einem weiteren Vorschlag in (1), wie er dort in den Fig. 14 bis 16 offenbart ist, wird ein weiterer, insgesamt keilförmig ausgebildeter Abstandshalter aus einem dünnen, plattenförmigen Werkstoff vorgeschlagen, der beidseitig parallel zur Luftströmung versetzt zueinander verlaufende keilförmige Ausbuchtungen aufweist, von denen eine Ausbuchtung auf der einen Plattenseite vom einen zum gegenüberliegenden anderen Ende des Abstandshalters hin allmählich abnimmt, während die nächstfolgende Ausnehmung auf der anderen Plattenseite in umgekehrter Richtung entsprechend allmählich abnimmt, so daß nur in der Mitte des Abstandshalters die Ausbuchtungen auf beiden Seiten etwa gleich stark sind, während die Ausbuchtungen am einen Ende zur einen Seite des Abstandshalters am stärksten und zur anderen Seite am schwächsten und am anderen Ende des Abstandshalters umgekehrt zur einen Seite am schwächsten und zur anderen Seite am stärksten sind. Der Abstandshalter kann nicht bis in die Spitze einer eng gefalteten Falte des Filterstoffs vordringen, so daß die Falte nicht bis in die äußerste Tiefe abgestützt wird. Außerdem wird auch hier die Rückreinigungsluft nicht symmetrisch auf die beiden Teilflächen einer Falte verteilt, um einen optimalen Reinigungseffekt zu erzielen.

Die nach dem weiteren Vorschlag (2) aus Karton oder ähnlichem Material bestehenden, wellenförmig ausgebildeten Abstandshalter haben den wesentlichen Nachteil, daß der Filterstoff unter der Wirkung des Gasdrucks des Mediums an den nur schwach gekrümmten Wellenkuppen relativ großflächig anliegt, wodurch die wirksame Filteroberfläche zu einem erheblichen Teil reduziert und die Filterleistung wesentlich verringert ist. Außerdem kann auch ein solcher Abstandshalter mit beidseitiger Wellenform nicht bis in die Spitze einer Falte des Filterstoffs vordringen. Er kann daher die Falte nicht in ihrer ganzen Tiefe abstützen. Hinzu kommt, daß die Standfestigkeit solcher Abstandshalter relativ gering und ihre Lebensdauer relativ beschränkt ist. Zudem lassen sich die Abstandshalter nicht bei Gasen mit höheren Temperaturen einsetzen. Derartige Filterkassetten sind daher auch stets Wegwerffilter, die sich nicht reinigen lassen.

Der Erfindung liegt die Aufgabe zugrunde, eine besonders gut rückreinigungsfähige Filterpatrone mit plissiertem Filterstoff für Filterapparate zu schaffen, bei welcher ein Kollabieren benachbarter Teilflächen des Filterstoffs einer Falte weitgehend vermieden und die Reinigung durch Rückreinigungsluftstöße wesentlich verbessert wird, so daß die Leistungsfähigkeit und die Wirksamkeit des Filters eine maximale mögliche Größe erreichen und der Filterstoff bei allen Betriebszuständen, d. h. insbesondere bei allen in Betracht kommenden Temperaturen und Drücken des zu reinigenden Gasstroms, den auftretenden Belastungen optimal standhält.

Zur Lösung dieser Aufgabe wird gemäß der Erfindung vorgeschlagen, die in Betracht kommenden Filterpatronen für Filterapparate in der Weise auszubilden, daß in die zur Abströmseite des Filterstoffes offenen Falten des Filterstoffs jeweils eine dünnwandige Platte eingesetzt ist, deren eine, im Inneren der Falte liegende Stirnkante geradlinig und deren andere, gegenüberliegende Stirnkante zickzackförmig ausgebildet ist, daß die Knick- bzw. Firstlinien zwischen den beiden Stirnkanten gegenüber der Mittenebene der Platte stetig ansteigen und daß die zickzackförmig ausgebildete Stirnkante an ihren beiden oberen und unteren Enden jeweils mittels eines Bundes an oberen und unteren Abdeckungen des Filterstoffes abgestützt ist.

Weitere Merkmale der erfindungsgemäß ausgebildeten Filterpatrone gehen aus den Unteransprüchen wie auch aus der nachstehenden Beschreibung eines bevorzugten Ausführungsbeispiels des Gegenstands der Erfindung hervor, welches in den Figuren 1 bis 3 der Zeichnung dargestellt ist. Es zeigen :

Figur 1 eine perspektivische Ansicht einer in eine Falte zwischen zwei Teilflächen des zickzackförmig gefalteten Filterstoffs einzulegenden Platte ;

Figur 2 einen Schnitt durch eine Falte des zickzackförmig gefalteten Filterstoffs, in welche eine Platte nach Fig. 1 eingesetzt ist ;

Figur 3 eine Aufsicht auf die offene Seite der Falte des Filterstoffs nach Fig. 2.

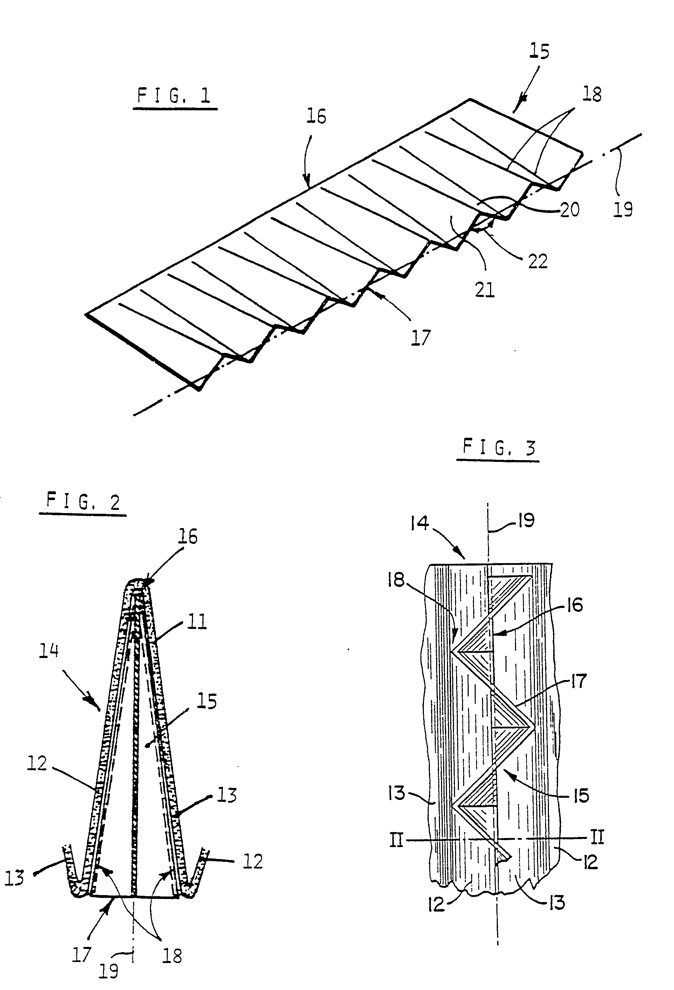

Wie aus Fig. 2 hervorgeht, ist der Filterstoff 11 einer Filterpatrone üblicher Bauart, welche in Filterapparate eingesetzt wird, zickzackförmig gefaltet. Der zickzackförmig gefaltete Filterstoff wird längs eines Kreises angeordnet.

Die Teilflächen 12 bzw. 13 des Filterstoffs 11 bilden jeweils eine Falte 14. Der zickzackförmig gefaltete Filterstoff 11 wird üblicherweise von einer Seite angeströmt, wobei die Verunreinigungen des Gasstromes am Filterstoff hängenbleiben bzw. sich in den Falten 14 zwischen den Teilflächen 12 und 13 des Filterstoffs ablagern, bis sie eine bestimmte Dichte erreicht haben und es erforderlich ist, den Filterstoff zu reinigen. Zu diesem Zweck wird ein Gasstrom in entgegengesetzter Richtung durch den Filterstoff geleitet, der die agglomerierten Verunreinigungen von der Oberfläche des Filterstoffs abstößt, die dann in einen Sammelraum fallen und abgezogen werden können.

Um nun dem Filterstoff, insbesondere den Teilflächen 12 und 13, die notwendige Steifigkeit und Stützung zu geben, ist in je eine Falte eine erfindungsgemäß ausgebildete Platte 15 nach Fig. 1 eingesetzt, die an ihrer einen Seite eine geradlinige Stirnkante 16 aufweist und deren gegenüberliegende Stirnkante 17 zickzackförmig geformt ist, und zwar derart, daß die Knick- bzw. Firstlinien 18 zwischen den beiden Stirnkanten 16 und 17 gegenüber der Mittenebene 19 der Platte 15 stetig ansteigen. Durch die spezifische zickzackförmige Faltung der Platte 15, die gegen die eine geradlinige Stirnkante 16 hin in der Mittenebene 19 der Platte 15 ausläuft, werden Teilflächen 20 bzw. 21 gebildet, die im Bereich der Knickbzw. Firstlinien 18 einen Winkel 22 einschließen, der zwischen etwa 90° und etwa 120° beträgt.

Bei einer derartigen Ausbildung der in die Falten 14 des zickzackförmig gefalteten Filterstoffs 11 eingesetzten Platten 15 werden Kanäle gebildet, die sich zur Austrittsseite einer jeden Falte 14 hin stetig erweitern und für eine strömungsgünstige Ableitung des durch den Filterstoff hindurchgetretenen Gases sorgen. Durch die zickzackförmige Faltung der Platte 15 mit ausgeprägten Faltlinien 18 liegt der Filterstoff nur linienförmig an der ihn stützenden Platte 15 an, so daß praktisch kein Verlust hinsichtlich der Filterfläche eintritt.

Die den Filterstoff 11 bzw. eine jede Falte 14 des Filterstoffs 11 abstützende Platte 15 kann aus jedem geeigneten Werkstoff bestehen, beispielsweise aus dünnem Metallblech oder aber auch aus einem formstabilen Kunststoff.

Gegebenenfalls kann die Platte 15 längs ihrer geradlinigen Stirnkante 16 mit einer Verstärkung versehen sein. Diese Verstärkung kann im Falle einer Metallplatte aus dem umgebördelten Rand gebildet sein oder aus einem Wulst, insbesondere in dem Falle, daß die Platte aus Kunststoff besteht.

Bei den Filterpatronen der in Betracht kommenden Art wird der zickzackförmig gefaltete Filterstoff auf der Abströmseite üblicherweise abgestützt, zumeist mittels eines Lochblechs oder Gitters. Dieses Stützmaterial beeinträchtigt notwendigerweise das Abströmen des durch den Filterstoff hindurchgetretenen Gasstromes mehr oder weniger stark. Dieser Nachteil läßt sich bei der erfindungsgemäß ausgebildeten Filterpatrone vermeiden, wenn die in die Falten 14 des zickzackförmig gefalteten Filterstoffs 11 eingesetzten Platten 15 im Bereich ihrer Enden an der hinteren zickzackförmig ausgebildeten Stirnkante 17 durch einen Bund abgestützt werden, der an der oberen und unteren Abdeckung des Filterstoffs 11 der Filterpatrone angeordnet ist. Bei einer derartigen Ausbildung bedarf es keiner Abstützung des zickzackförmig gefalteten Filterstoffs in der bisher üblichen Weise.

### Patentansprüche

1. Rückreinigungsfähige Filterpatrone für Filterapparate zum Entfernen von Verunreinigungen aus heißen und bzw. oder unter höherem Druck stehenden, strömenden Gasen mit zickzackförmig gefaltetem, gasdurchströmtem Filterstoff, dessen faltungsbedingte Teilflächen zwischen den Faltlinien relativ dicht nebeneinanderliegend angeordnet sind, dadurch gekennzeichnet, daß in die zur Abströmseite des Filterstoffes offenen Falten des Filterstoffes (11) jeweils eine dünnwandige Platte (15) eingesetzt ist, deren eine, im Inneren der Falte (14) liegende Stirnkante (16) geradlinig und deren andere, gegenüberliegende Stirnkante (17) zickzackförmig ausgebildet ist, daß die Knick- bzw. Firstlinien (18) zwischen den beiden Stirnkanten (16, 17) gegenüber der Mittenebene (19) der Platte (15) stetig ansteigen und daß die zickzackförmig ausgebildete Stirnkante (17) an ihren beiden oberen und unteren Enden jeweils mittels eines Bundes an oberen und unteren Abdeckungen des Filterstoffes abgestützt ist.

2. Filterpatrone nach Anspruch 1, dadurch gekennzeichnet, daß die Platte (15) längs der geraden Stirnkante (16) eine Verstärkung aufweist.

3. Filterpatrone nach Anspruch 2, dadurch gekennzeichnet, daß der Rand der Platte (15) längs der geradlinigen Stirnkante (16) umgebördelt ist.

4. Filterpatrone nach Anspruch 2, dadurch gekennzeichnet, daß der Rand der Platte (15) längs der geradlinigen Stirnkante (16) mit einem Wulst versehen ist.

5. Filterpatrone nach einem oder mehreren der Ansprüche 1 bis 4, dadurch gekennzeichnet, daß die Teilflächen (20, 21) der Falten der Platte (15) im Bereich der zickzackförmig ausgebildeten Stirnkante (17) einen Winkel (22) zwischen etwa 90° und etwa 120° einschließen.

### Claims

1. Retro-cleanable filter cartridge for filter apparatus for the removal of impurities from hot and/or more highly pressurized flowing gases, with zig-zag folded, gas-penetrated filter material with the part surfaces between the fold lines defined by the folding being arranged in relatively close juxtaposition to each other, characterized in that one thin-walled plate (15) each is inserted into the open folds of the filter material (11) on the downstream side of the filter material, with the one plate edge (16) disposed in the inside of the fold (14) being straight and the other, opposite plate edge (17) being zig-zag shaped, that the bend or crest lines (18) between the two plate edges (16, 17) rise steadily relative to the medial plane (18) of the plate (15) and that the zig-zagged plate edge (17) is braced at its two upper and lower ends in each case by a band on the upper and lower covers of the filter material.

2. Filter cartridge according to claim 1, characterized in that the plate (15) has a reinforcement along the straight edge (16).

3. Filter cartridge according to claim 2, characterized in that the edge of the plate (15) is beaded along the straight edge (16).

4. Filter cartridge according to claim 2, characterized in that the edge of the plate (15) is provided with a bulge along the straight edge (16).

5. Filter cartridge according to one or more of claims 1 to 4, characterized in that the part surfaces (20, 21) of the folds of the plate (15) in the area of the zig-zagged edge (17) enclose an angle (22) of between approximately 90° and approximately 120°.

### Revendications

1. Cartouche de filtre régénérable pour appareils de filtration, destinée à retenir des impuretés dans un flux gazeux éventuellement à température élevée et/ou sous pression élevée, comportant une matière filtrante pliée en forme de zig-zag, traversée par le gaz, dont les faces partielles formées par les plis sont disposées, entre les lignes de pliure, de façon relativement serrées entre elles, caractérisée par le fait que dans les plis de la matière filtrante (11), ouverts du côté du flux sortant, sont disposées des plaques de faible épaisseur (15) dont une arrête (16) située à l'intérieur des plis (14) est rectiligne et dont l'autre arête opposée (17) est réalisée en forme de zig-zag, en sorte que les lignes de pliure ou génératrices (18) entre les arêtes (16, 17) sont régulièrement ascendantes par rapport au plan médian (19) de la plaque (15), caractérisée également par le fait que l'arête en zig-zag (17) est appuyée à ses extrémités supérieure et inférieure et à l'aide d'un collet aux couvercles supérieur et inférieur de la matière filtrante.

2. Cartouche de filtre selon la revendication 1, caractérisée par le fait que la plaque (15) comporte un renfort le long de l'arête rectiligne (16).

3. Cartouche de filtre selon la revendication 2, caractérisée par le fait que le bord de la plaque (15) est plié le long de l'arête rectiligne (16).

4. Cartouche de filtre selon la revendication 2, caractérisée par le fait que le bord de la plaque (15) comporte un renflement le long de l'arête rectiligne (16).

5. Cartouche de filtre selon une ou plusieurs des revendications 1 à 4, caractérisée par le fait que les faces partielles (20, 21) des plis de la plaque (15) montrent, dans la région de l'arête en zig-zag (17) un angle (22) compris entre environ 90° et environ 120°.

FIG. 1

FIG. 2

FIG. 3